# FASCICULE DE BREVET EUROPEEN

(11) **EP 3 854 728 B1**
(45) Date de publication et mention de la délivrance du brevet: **18.03.2026**
(21) Numéro de dépôt: 21152559.7
(22) Date de dépôt: 20.01.2021
(51) Int. Cl.: B65G 1/137

(54) **INSTALLATION ET PROCÉDÉ DE PRÉPARATION DE COMMANDES**
ANLAGE UND VERFAHREN ZUR VORBEREITUNG VON BESTELLUNGEN
INSTALLATION AND METHOD FOR PREPARING ORDERS

(30) Priorité: 24.01.2020 FR 2000688
(43) Date de publication de la demande: 28.07.2021
(73) Titulaire: C-Log Solutions, 35400 Saint Malo (FR)
(72) Inventeur: LE FLOHIC, Julien C., 35400 Saint-Malo (FR); DE L'ESPINAY, Bertrand D., 35400 Saint-Malo (FR); PAGIS, Georges H., 35400 Saint-Malo (FR)
(74) Mandataire: Cabinet Beau de Loménie

(56) Documents cités:
- WO-A1-2018/053236
- WO-A1-2019/122598
- DE-A1- 102015 114 393
- US-A1- 2014 100 999
- US-A1- 2016 101 940
- US-A1- 2017 336 780
- US-A1- 2018 265 298
- US-B1- 9 463 927

## Description

### Domaine Technique

Le présent exposé concerne une installation logistique permettant de préparer des commandes de manière souple et agile.

Une telle installation logistique peut aussi bien être utilisée pour préparer des commandes de commerce électronique que des commandes de gros, pour des ventes B2B par exemple ou pour des réapprovisionnements de magasins. Une telle installation peut notamment être utilisée dans le domaine de l'habillement ou plus généralement de la mode ; toutefois, elle pourrait tout à fait être utilisée dans d'autres domaines nécessitant de telles installations logistiques (biens culturels, bricolage, alimentaire etc.)

### Technique antérieure

Les installations logistiques utilisées jusqu'à présent ont été développées à une époque où le commerce électronique était inexistant ou encore marginal : en conséquence, elles sont été conçue pour traiter des flux d'articles importants, correspondant essentiellement à des ventes en gros, caractérisées par des volumes importants et des échéances globalement bien maitrisées.

Ainsi, un procédé de préparation de commandes classique consiste à agréger les commandes sur une durée assez longue, typiquement une dizaine d'heure, afin d'atteindre un nombre d'articles suffisamment important, par exemple 10 000 articles. Une fois ce volume, appelé couramment « masse », atteint, une première trieuse subdivise ce volume primaire en une pluralité de volumes secondaires plus petits en prenant soin de ne pas scinder de commande entre plusieurs volumes. Des trieuses secondaires sont alors mises en œuvre pour subdiviser à nouveau ces volumes secondaires en volumes tertiaires encore plus petits, toujours en s'assurant de ne pas scinder de commande. De telles subdivisions sont alors menées successivement jusqu'à atteindre des volumes finaux suffisamment petits pour qu'un opérateur puisse finir la préparation de commande manuellement, cette dernière étape consistant en général à répartir les articles de chaque volume final dans un casier en fonction des commandes reçues.

Un tel procédé est ainsi particulièrement adapté pour traiter de gros volumes. Il peut certes également traiter de plus petites commandes telles des commandes en ligne, mais au prix toutefois de plusieurs inconvénients.

Tout d'abord, un tel procédé ne peut répondre en temps réel aux commandes en ligne puisqu'une période d'une dizaine d'heures est nécessaire pour accumuler le volume nécessaire au lancement du tri, ce qui peut poser problème lorsqu'une livraison en 24h est souhaitée.

Ce procédé est également assez rigide puisqu'il difficilement adaptable aux variations de flux, entre le jour et la nuit par exemple, ou entre des périodes commerciales intenses (fêtes de fin d'années par exemple) et des périodes plus creuses : en effet, l'ensemble de l'installation, et en particulier la trieuse primaire dimensionnée pour 10 000 articles, doit être activé même si seulement une centaine d'articles ont été commandés sur la période. De même, une telle installation est difficilement adaptable en cas de gain ou de perte importante de marché (ouvertures de nouveaux magasins par exemple) puisque le dimensionnement de la trieuse primaire ne peut être modifié. Une telle installation est également difficilement adaptable à différentes structures de commandes, par exemple lorsque des commandes incluant un petit nombre d'articles sont reçues en même temps que des commandes incluant un grand nombre d'articles. Par ailleurs, les trieuses sont dimensionnées pour trier des objets ayant une taille donnée, mais également ayant un poids donné et potentiellement d'autres caractéristiques données telle la fragilité, ce qui réduit la possibilité de diversifier la nature ou la taille des articles.

Un autre défaut du procédé actuel est qu'il est difficilement automatisable puisque la dernière étape de consolidation des commandes consiste en une répartition dans des casiers réalisée par des opérateurs. Enfin, ce procédé est incapable de traiter les problématiques de retours de commandes, beaucoup plus fréquents depuis l'émergence du commerce électronique.

Il existe donc un réel besoin pour une installation et un procédé de préparation de commandes qui soient dépourvus, au moins en partie, des inconvénients inhérents à la méthode connue précitée. Un procédé et une installation de préparation de commandes mettant en oeuvre des navettes est divulgué dans US 9 463 927 B1.

### Exposé de l'invention

Le présent exposé concerne une installation de préparation de commandes, comprenant
une pluralité de stations d'entrée,
une pluralité de stations de sortie,
une première flotte de navettes mobiles configurée pour assurer une première phase de consolidation de commande, chaque navette comportant un dispositif de locomotion, permettant à la navette de se déplacer entre les stations d'entrée et les stations de sortie, et un réceptacle prévu pour recevoir un article, et
une unité de contrôle,
dans laquelle, en vue de préparer une commande incluant au moins deux articles, l'unité de contrôle est configurée pour
diriger une première navette vers une première station d'entrée pour prélever un premier article,
diriger une deuxième navette vers une deuxième station d'entrée pour prélever un deuxième article, et
diriger les première et deuxième navettes vers une station de sortie donnée pour décharger les premier et deuxième articles à ladite station de sortie.
L'installation de préparation de commandes comprend une deuxième flotte de navettes configurée pour assurer une deuxième phase de répartition des expéditions des articles.

Ainsi, dans une telle installation, chaque article est pris en charge par une navette différente et la consolidation de la commande est assurée par le regroupement des navettes concernées, ayant chacune prélevé un article de la commande au niveau des stations d'entrée, au niveau d'une même station de sortie. En particulier, l'ordre de sortie des articles du stock est indifférent puisque chaque article pourra être pris en charge individuellement par une navette différente, l'ordre des articles requis pour la commande, s'il en existe un, pouvant être reconstitué en imposant un ordre d'arrivée des navettes à la station de sortie. Ceci offre un degré de liberté supplémentaire pour gérer le stock et ainsi faciliter la sortie des articles.

Dès lors, aucune étape de mise en casier n'est désormais nécessaire :
chaque commande peut ainsi être préparée pratiquement en temps réel, sans étape de tri préalable. En conséquence, grâce à cette installation, les commandes peuvent être traitées pratiquement immédiatement, selon la file d'attente des commandes, sans qu'il soit nécessaire d'accumuler les commandes jusqu'à atteindre un volume prédéterminé. Ainsi, par exemple, des commandes peuvent être préparées la nuit, en période creuse, sans retard.

Cette installation offre également une grande flexibilité puisque, chaque article étant manipulé individuellement, il suffit d'ouvrir un nombre plus ou moins importants de stations d'entrée et de sortie, ainsi que d'activer un nombre plus ou moins important de navettes, pour répondre en temps réel à la demande. Cette installation bénéficie donc d'une meilleure proportionnalité entre le flux d'articles et les moyens mis en œuvre pour le traiter. De même, en cas d'acquisition de nouveaux marchés, lors de l'ouverture de nouveaux magasins par exemple, l'investissement supplémentaire est limité à l'acquisition de nouvelles navettes et/ou de stations d'entrée ou de sortie, sans qu'il soit nécessaire de remplacer l'existant.

Cette installation peut également s'adapter à un grand nombre d'objets différents : il suffit en effet, le cas échéant, de modifier la taille et/ou la géométrie du réceptacle des navettes pour s'adapter à un nouvel objet, sans qu'il soit nécessaire de modifier la navette elle-même ou de la reprogrammer. A ce propos, ce réceptacle peut prendre des formes très variées : il peut s'agir d'un bac par exemple, mais il peut également s'agir d'une simple plate-forme plane, munie éventuellement de moyens de fixation telles des pinces. Le cas échéant, la flotte de navettes peut également comprendre des navettes de plusieurs types différents, munies de réceptacles ayant des tailles et/ou des géométries différentes, afin de traiter simultanément, au sein de la même installation, des articles ayant différentes natures, éventuellement commercialisés sous différentes marques.

De plus, cette installation permet de réduire de manière très importante le recours à des opérateurs, limitant éventuellement leur recours à de simples opérations de transfert d'articles, de point à point, entre une station et une navette ou vice-versa. L'installation peut même être entièrement automatique en robotisant ces opérations de transfert.

Enfin, les retours d'articles peuvent facilement être réalisés, en utilisant le même système navettes. Dans un tel cas, par exemple, une station de sortie sera une station capable de réinjecter des articles dans le stock.

Dans certains modes de réalisation, l'unité de contrôle est configurée pour mobiliser, pour au moins les commandes incluant moins de 5 articles, autant de navettes que d'articles dans les commandes considérées. On évite ainsi des allers-retours de navettes pour une même commande, ce qui permet de gagner du temps sur le traitement de la commande. Toutefois, cette option est privilégiée pour les commandes incluant un nombre d'articles réduit, par exemple moins de 10 articles ou un nombre représentant moins de 15% du nombre total de navettes dans la flotte de navettes ; cette possibilité peut également être utilisée pour certains types de commandes, par exemple les commandes en ligne.

Dans certains modes de réalisation, pour une commande donnée, l'unité de contrôle est configurée pour ordonner le déchargement des articles à la station de sortie uniquement lorsque tous les articles de ladite commande donnée ont été prélevés par des navettes. Ainsi, on s'assure que la commande est bien complète avant de commencer son déchargement, ce qui évite d'immobiliser une station de sortie si une telle commande doit être annulée. Ceci évite également, par exemple, de commencer le conditionnement de la commande si cette dernière doit être annulée. Ici encore, cette option est privilégiée pour les commandes un nombre d'articles réduit ou plus généralement pour les commandes en ligne.

Dans certains modes de réalisation, l'installation comprend une zone d'attente, l'unité de contrôle étant configurée pour diriger au moins une navette vers la zone d'attente lorsque des conditions d'attente sont établies. Une telle zone permet d'entreposer dans une zone déterminée les navettes qui doivent attendre une condition particulière, ceci afin de ne pas gêner la circulation des autres navettes. Cette zone d'attente peut être unique ; elle peut également être divisée en plusieurs zones réparties en plusieurs endroits de l'installation. Ces zones d'attente peuvent être prédéterminées, et éventuellement repérées par un marquage physique, ou bien établies puis dissoutes en cours d'opération par l'unité de contrôle.

Dans certains modes de réalisation, l'unité de contrôle est configurée pour diriger vers la zone d'attente au moins une navette ayant prélevé un article d'une commande donnée si au moins un autre article de ladite commande donnée n'est pas encore arrivé à une station d'entrée. Ceci permet de libérer rapidement les stations d'entrée après le prélèvement des articles et de laisser libre la station de sortie le plus longtemps possible avant son utilisation effective. Une telle attente peut notamment être systématique dès lors que la commande comprend plusieurs articles, sauf éventuellement s'il s'agit d'une commande en gros.

Dans certains modes de réalisation, l'unité de contrôle est configurée pour diriger vers la zone d'attente au moins une navette ayant prélevé un article d'une commande donnée si aucune station de sortie n'est disponible pour recevoir les articles de ladite commande donnée. Ceci permet de libérer rapidement les stations d'entrée après le prélèvement des articles, même si aucune station de sortie n'est disponible.

Dans certains modes de réalisation, l'unité de contrôle est configurée pour ordonner le déchargement des articles d'une commande donnée dans un ordre prédéterminé. Il peut notamment s'agir de l'ordre des articles sur le bon de commande. Dans un tel cas, l'unité de contrôle peut contrôler les navettes de manière à ce que leur ordre d'arrivée au niveau de la station de sortie corresponde à cet ordre prédéterminé.

Dans certains modes de réalisation, au moins une station d'entrée est une station d'injection connectée à un magasin. Ainsi, les articles des différentes commandes peuvent être sortis du magasin et présentés, l'une après l'autre, au niveau de la station d'injection en vue de leur prélèvement par une navette. Cette connexion peut être manuelle, par l'intermédiaire d'un ou plusieurs magasiniers, semi-automatique, ou complètement automatique, par l'intermédiaire d'un transstockeur par exemple.

Dans certains modes de réalisation, au moins une station d'entrée est une station de retour configurée pour présenter des articles retournés par des clients.

Toutefois, il convient de comprendre que les stations d'entrée et de sortie peuvent être de tout type envisageable et peuvent être modulables et interchangeables selon les applications visées.

Dans certains modes de réalisation, au moins une station d'entrée, et de préférence chaque station d'entrée, est configurée pour présenter un nombre réduit de références d'article à la fois, par exemple quatre au maximum ou de préférence une seule référence d'article. Il est également envisageable qu'un seul article soit présenté à la fois. De cette manière, on évite les éventuelles erreurs de prélèvement d'article. En pratique, on privilégiera des bacs mono-référence, sauf pour des articles de petite taille qui peuvent partager un même bac, éventuellement compartimenté. Ceci concerne de préférence les stations d'injection ; les stations de retour peuvent pour leur part présenter les articles retournés en vrac.

Dans certains modes de réalisation, le prélèvement d'un article d'une station d'entrée vers une navette est manuel ou automatique.

Dans certains modes de réalisation, l'unité de contrôle est configurée pour assigner à chaque station de sortie un statut de disponibilité. Ce statut de disponibilité peut comprendre un statut d'ouverture (ouverte/fermée) ainsi qu'un statut d'attribution (prête/attribuée).

Dans certains modes de réalisation, l'unité de contrôle est configurée pour former des groupes de stations de sortie et pour rattacher chaque station de sortie à un ou plusieurs groupes. De tels groupes peuvent notamment permettre de répartir les commandes selon leur type, par exemple par volume ou par marque ou nature d'article.

Dans certains modes de réalisation, l'unité de contrôle est configurée pour attribuer plusieurs stations de sortie à une commande donnée si le nombre d'articles de ladite commande donnée dépasse la capacité d'une station de sortie.

Dans certains modes de réalisation, le déchargement d'un article d'une navette vers une station de sortie est manuel ou automatique.

Dans certains modes de réalisation, au moins une station de sortie est une station de conditionnement configurée pour conditionner ensemble les différents articles d'une commande donnée. Ce type de station de sortie est tout particulièrement adapté pour le commerce électronique.

Dans certains modes de réalisation, au moins une station de sortie est une station de gros configurée pour stocker un nombre important d'articles. Par exemple, ces stations de gros peuvent stocker plus de 50 articles, de préférence plus de 100 articles. Ce type de station de sortie est tout particulièrement adapté pour les ventes B2B ou pour les réapprovisionnements de magasins par exemple.

Dans certains modes de réalisation, au moins une station de sortie est une station de réintégration, connectée au magasin. Une telle station de réintégration permet de réintégrer dans le magasin des articles retournés par des clients. Elle peut aussi permettre la réintégration d'articles portés par des navettes, lors de l'annulation d'une commande par exemple. Cette connexion peut être manuelle, par l'intermédiaire d'un ou plusieurs magasiniers, semi-automatique, ou complètement automatique, par l'intermédiaire d'un transstockeur par exemple.

Dans certains modes de réalisation, l'installation comprend au moins une station d'erreur prévue pour recevoir des articles faisant l'objet d'une erreur.

Dans certains modes de réalisation, l'unité de contrôle est configurée pour ouvrir ou fermer certaines stations d'entrée et/ou certaines stations de sortie. Ceci permet de proportionner en temps réel les moyens mis en œuvre en fonction du flux d'articles, ce qui permet de réduire les coûts d'exploitation.

Dans certains modes de réalisation, l'unité de contrôle est configurée pour diriger une navette vers une station d'erreur et y décharger l'article porté par cette navette si la commande concernée est erronée, annulée ou a dépassé un délai prédéterminé. Selon le type d'erreur, l'article peut également être déchargé dans une station de réintégration.

Dans certains modes de réalisation, chaque article porte un élément d'identification. Il peut notamment s'agir d'un code barre ou d'une étiquette RFID. L'article peut ainsi être suivi et contrôlé tout le long du procédé de préparation de commande ; à défaut, un signal d'erreur peut être émis.

Dans certains modes de réalisation, la flotte de navettes comprend au moins 20 navettes, de préférence au moins 100 navettes, de préférence encore au moins 300 navettes. Par exemple, une telle flotte de 20 navettes permet d'atteindre un flux d'environ 400 articles par heure tandis qu'une flotte de 300 navettes permet d'atteindre un flux d'environ 8000 articles par heure.

Dans certains modes de réalisation, l'unité de contrôle est configurée pour activer ou désactiver certaines navettes. Ceci permet de proportionner en temps réel les moyens mis en œuvre en fonction du flux d'articles, ce qui permet de réduire les coûts d'exploitation. Les navettes ainsi désactivées peuvent alors être entreposées dans une zone de stockage ; cette dernière peut être située en bordure de la surface de circulation ou bien dans une zone dédiée de la surface de circulation. Les navettes sont capables d'entrer et de sortir de la zone de stockage de manière autonome.

Dans certains modes de réalisation, chaque navette est prévue pour transporter un seul article à la fois.

Dans certains modes de réalisation, les navettes se déplacent le long d'une surface de circulation. Cette surface de circulation est de préférence plane ; les stations d'entrée peuvent par exemple être prévues le long d'un premier bord de cette surface de circulation tandis que les stations de sorties peuvent être prévues le long d'un deuxième bord de cette surface de circulation, par exemple le bord opposé.

Dans certains modes de réalisation, la surface de circulation est dépourvue de rails physiques. En revanche, des lignes de circulations ou d'autres repères peuvent être prévus le long de la surface de circulation pour assister la navigation autonome des navettes.

Dans certains modes de réalisation, la surface de circulation s'étend sur au moins deux étages distincts.

Dans certains modes de réalisation, au moins une station d'entrée est une station de conditionnement et au moins une station de sortie est une station d'expédition. En effet, jusqu'à présent, l'installation a été décrite dans le cas d'une consolidation de commande, du magasin jusqu'au conditionnement ; toutefois, le même système de navettes peut être utilisé de manière tout à fait analogue pour trier et répartir les commandes mises en colis entre différentes stations d'expédition. Ainsi, en particulier, l'installation peut comprendre une première flotte de navettes chargée de la consolidation des commandes et une deuxième flotte de navettes chargée de la répartition des expéditions. Naturellement, selon les besoins, une même navette individuelle peut être affectée à l'une et/ou l'autre de ces flottes.

Le présent exposé concerne également un procédé de préparation de commandes mettant en œuvre
une pluralité de stations d'entrée,
une pluralité de stations de sortie,
une première flotte de navettes mobiles configurée pour assurer une première phase de consolidation de commande, chaque navette comportant un dispositif de locomotion, permettant à la navette de se déplacer entre les stations d'entrée et les stations de sortie, et un réceptacle prévu pour recevoir un article, et
une unité de contrôle,
dans lequel, en vue de préparer une commande incluant au moins deux articles,
une première navette est dirigée vers une première station d'entrée pour prélever un premier article,
une deuxième navette est dirigée vers une deuxième station d'entrée pour prélever un deuxième article, et
les première et deuxième navettes sont dirigées vers une station de sortie donnée pour décharger les premier et deuxième articles à ladite station de sortie.
Le procédé comprend une deuxième phase de répartition des expéditions des articles assurée par une deuxième flotte de navettes.

Naturellement, toutes les configurations présentées au sujet de l'installation peuvent se transposer à ce procédé de préparation de commande en vue d'obtenir les mêmes effets et avantages.

Les caractéristiques et avantages précités, ainsi que d'autres, apparaîtront à la lecture de la description détaillée qui suit, d'exemples de réalisation de l'installation et du procédé proposés. Cette description détaillée fait référence aux dessins annexés.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence.
[Fig. 1] La figure 1 est une vue en plan d'une installation selon l'exposé.
[Fig. 2] La figure 2 illustre une préparation de commande mono-article.
[Fig. 3] La figure 3 illustre une préparation de commande multi-articles.
[Fig. 4] La figure 4 est un ordinogramme illustrant une routine de consolidation de commande pour une navette.
[Fig. 5] La figure 5 est un schéma illustrant la consolidation de plusieurs exemples de commandes.
[Fig. 6] La figure 6 illustre le traitement d'une commande erronée.
[Fig. 7] La figure 7 illustre une préparation de commande de gros.
[Fig. 8] La figure 8 illustre un retour d'article.
[Fig. 9] La figure 9 est un ordinogramme illustrant une routine de répartition d'expédition pour une navette.

### Description des modes de réalisation

Afin de rendre plus concret l'exposé, des exemples d'installation et de procédé de préparation de commande sont décrits en détail ci-après, en référence aux dessins annexés. Il est rappelé que l'invention ne se limite pas à ces exemples.

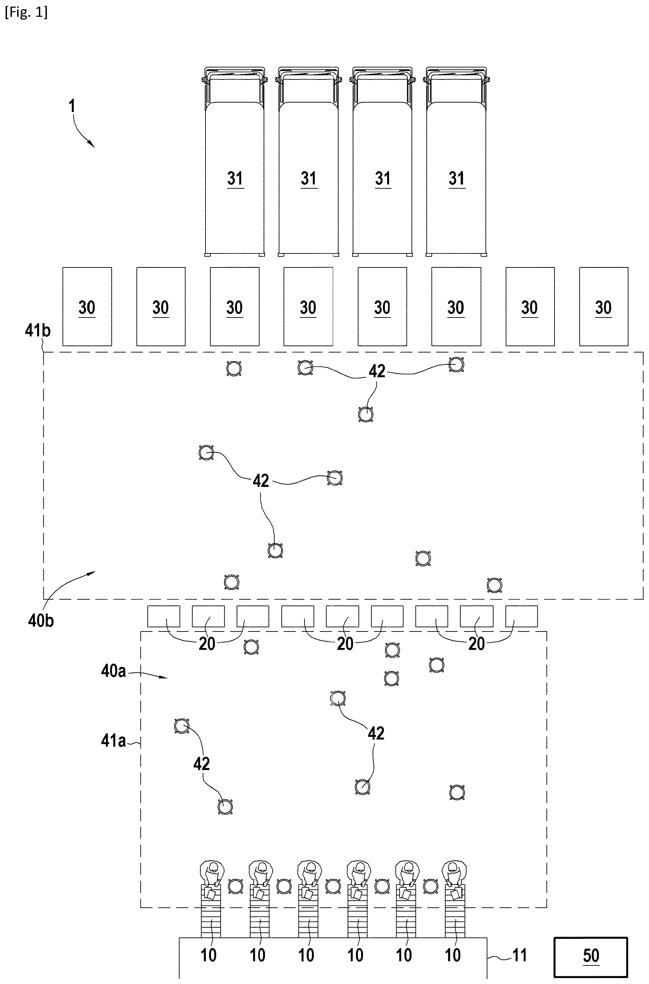

La figure 1 représente un exemple d'installation 1 selon l'exposé. Cette installation comprend une pluralité de stations d'injection 10, connectées à un magasin 11, une pluralité de stations de conditionnement 20 et une pluralité de stations d'expédition 30. Une première flotte 40a de navettes 42 circule entre les stations d'injection 10 et la face amont des stations de conditionnement 20 le long d'une première surface de circulation 41a ; une deuxième flotte 40b de navettes 42 circule pour sa part entre la face aval des stations de conditionnement 20 et les stations d'expédition 30 le long d'une deuxième surface de circulation 41b. Une unité de contrôle 50 est prévue pour superviser et contrôler l'ensemble de l'installation 1.

La première flotte de navettes 40a assure le travail de consolidation des commandes tandis que la deuxième flotte de navettes 40b assure le travail de répartition des expéditions.

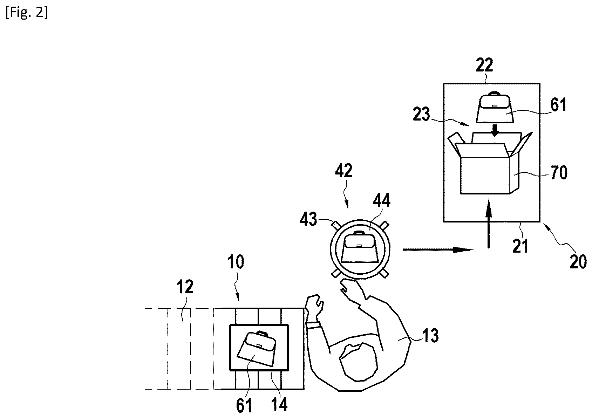

Chaque station d'injection 10, qui est un type de station d'entrée pour la première flotte de navette 40a, est connectée à un magasin 11 comportant l'ensemble des articles 61 référencés et disponibles à la commande. Cette connexion peut notamment être réalisée à l'aide d'un transstockeur. Comme cela est représenté sur la figure 2, chaque station d'injection 10 comprend un convoyeur 12 prévu pour amener devant un opérateur 13 des caisses 14 issues du magasin 11 et comprenant chacune une unique référence d'articles 61 (même marque, même modèle et même taille). Une fois un exemplaire de l'article 61 prélevé par l'opérateur 13, le convoyeur 12 renvoie la caisse 14 vers le magasin 11.

Chaque navette 42 comporte un dispositif de locomotion 43 et un réceptacle 44. Chaque navette 42 comporte également des capteurs, une électronique de commande, et un dispositif de communication lui permettant de communiquer avec l'unité de contrôle 50.

Chaque station de conditionnement 20, qui est un type de station de sortie pour la première flotte de navettes 40a et un type de station d'entrée pour la deuxième flotte de navettes 40b, comprend une face amont 21, une face aval 22 et un dispositif de conditionnement 23 configuré pour conditionner des articles 61 dans des colis 70.

Chaque station d'expédition 30, qui est un type de station de sortie pour la deuxième flotte de navettes 40b, est prévue pour entreposer des colis 70 en vue de leur expédition. Il peut notamment s'agir de quais d'expédition devant lesquels des camions 31 peuvent stationner.

Chaque station de sortie 20, 30 est munie d'un capteur de déchargement permettant de confirmer que le déchargement de l'article 61 ou du colis 70 a bien été effectué.

L'unité de contrôle 50 attribue à chaque station de sortie 20, 30 un statut d'ouverture, pouvant prendre les valeurs « ouverte » ou « fermée » ainsi qu'un statut d'attribution, pouvant prendre les valeurs « prête » ou « attribuée ». L'unité de contrôle 50 rattache également chaque station de sortie 20, 30 à un ou plusieurs groupes de stations de sortie en fonction des types de commandes attendus.

Un procédé de préparation de commande se décompose en une première phase de consolidation de commande, réalisée par la première flotte de navettes 40a, et une deuxième phase de répartition des expéditions, réalisée par la deuxième flotte de navettes 40b.

La première phase de consolidation de commande va maintenant être expliquée en référence aux figures 2 à 5.

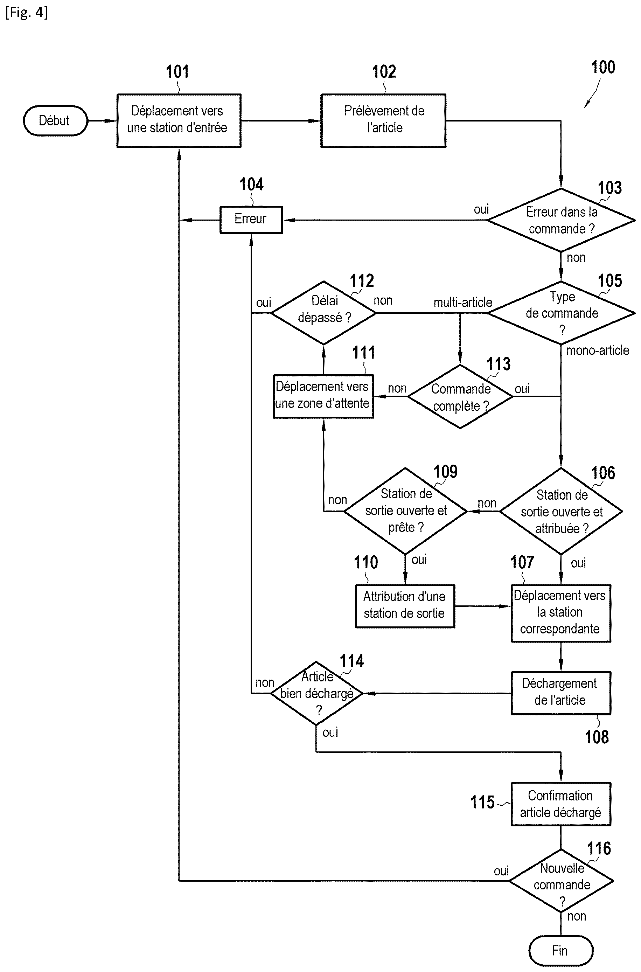

En particulier, la figure 4 détaille une routine 100 de contrôle de navette mise en œuvre par l'unité de contrôle 50. Cette routine débute alors qu'une commande a été reçue et qu'un premier article 61 a été attribué à une première station d'injection 10. Une navette 42 se déplace alors jusqu'à cette station d'injection 10 (étape 101). L'article présenté par cette station d'injection 10 est alors transféré sur la navette 42 (étape 102). En pratique, dans cet exemple, ce transfert est opéré par l'opérateur 13 ; toutefois, il est envisageable de robotiser ce transfert.

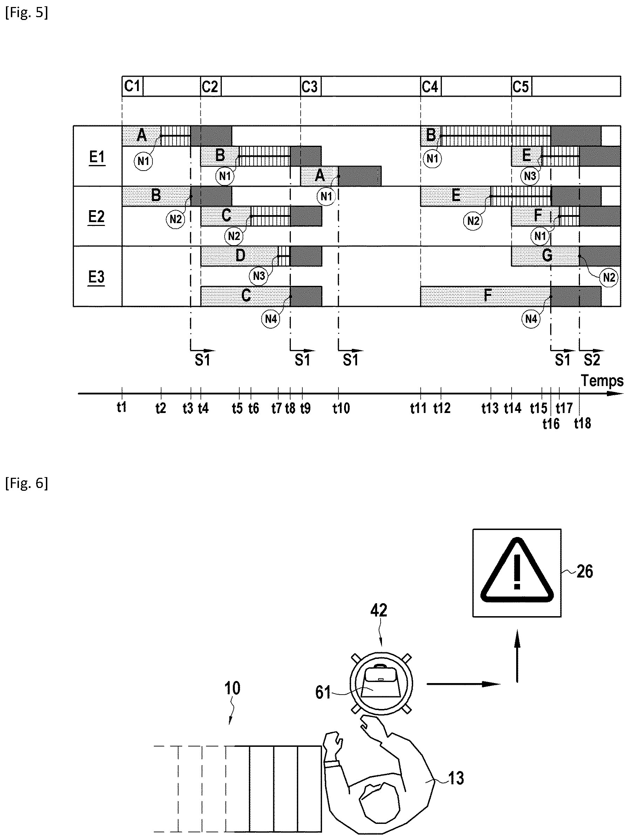

L'unité de contrôle 50 vérifie ensuite s'il existe une erreur dans la commande (étape 103) : si c'est le cas, la navette 42 passe en mode erreur, décharge l'article 61 qu'elle porte et se retrouve prête pour traiter une nouvelle commande (étape 104). En particulier, comme cela est représenté sur la figure 6, l'installation 1 peut comprendre une station d'erreur 26, qui est un type de station de sortie pour la première flotte de navettes 40a, destinée à recevoir les pièces ainsi déchargées par les navettes 42 en mode erreur.

En l'absence d'erreur, l'unité de contrôle 50 vérifie le type de commande (étape 105). S'il s'agit d'une commande mono-article (cas de la figure 2), l'unité de contrôle 50 vérifie s'il existe déjà une station de conditionnement 20 ouverte et attribuée pour cette commande (étape 106) : si c'est le cas, la navette 42 se déplace alors jusqu'à cette station de conditionnement 20 (étape 107). L'article 61 est alors déchargé, manuellement ou automatiquement, et pris en charge par la station de conditionnement 20 (étape 108).

Si aucune station de conditionnement 20 n'est déjà attribuée pour cette commande, l'unité de contrôle 50 vérifie s'il existe une station de conditionnement 20 ouverte et prête à être attribuée au sein du groupe de stations de sortie adapté à la commande en cours (étape 109). S'il existe bien une telle station, l'unité de contrôle 50 sélectionne une telle station 20 et lui attribue la commande en cours (étape 110) : la navette 42 se déplace alors vers cette station 20 (étape 107). A défaut, la navette 42 se déplace vers une zone d'attente 49 (étape 111) pour attendre qu'une station de conditionnement 20 adaptée soit rendue disponible (ouverte et prête). Lors de cette attente, si un délai prédéterminé est dépassé (étape 112), la navette 42 passe en mode erreur (étape 104).

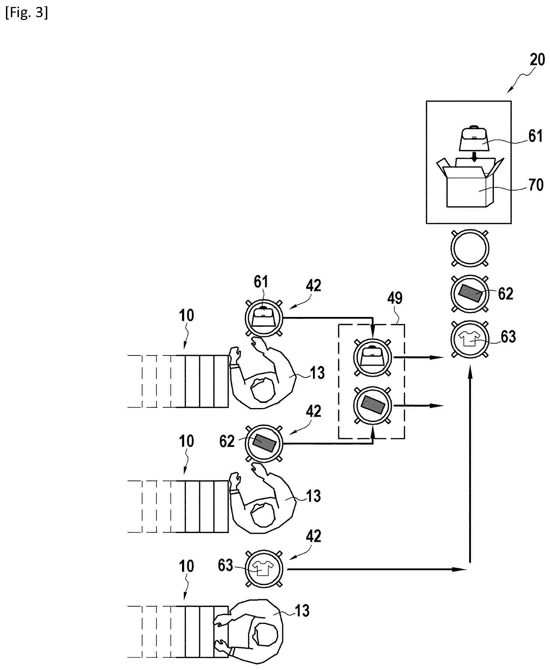

S'il s'agit maintenant d'une commande multi-articles (cas de la figure 3), l'unité de contrôle 50 vérifie si la commande en cours est complète (étape 113), autrement dit si l'ensemble des articles 61, 62, 63 de la commande ont bien été pris en charge par des navettes 42. Si ce n'est pas le cas, la navette 42 se déplace vers une zone d'attente 49 (étape 111) et attend à cet endroit jusqu'à ce que la commande soit complète ou jusqu'à ce qu'un délai prédéterminé soit dépassé (étape 112), auquel cas la navette 42 passe en mode erreur (étape 104). Comme cela est visible sur la figure 3, les navettes 42 portant les articles 61-63 d'une même commande attendent de préférence les unes à côté des autres au sein de cette zone d'attente 49.

Une fois la commande complète, les navettes 42 portant les articles 61-63 de la commande en cours se dirigent vers la station de conditionnement 20 attribuée à cette commande (étape 107), quitte à en attribuer une si nécessaire comme cela a été expliqué plus haut. A cette occasion, de préférence, les navettes 42 participant à une même commande, ou au moins celles qui attendaient dans la zone d'attente 49, peuvent se déplacer en groupe, formant par exemple un train de navettes 42.

En tout état de cause, après l'étape 108 de déchargement, l'unité de contrôle 50 vérifie, à l'aide de capteurs présents sur la navette 42 et/ou sur la station de conditionnement 20, si l'article 61 a bien été déchargé (étape 114). Si cela n'est pas le cas, la navette 42 passe en mode erreur (étape 104). Au contraire, si la vérification est positive, l'unité de contrôle 50 confirme que l'article 61 est bien déchargé (étape 115). La navette 42 est alors libérée et peut aller chercher un nouvel article 61 si une nouvelle commande est reçue (étape 116).

Un exemple d'allocation de commandes C1, C2, C3, C4, C5 entre différentes stations d'entrée E1, E2, E3, différentes navettes N1, N2, N3, N4 et différentes stations de sortie S1, S2 va maintenant être décrit en référence à la figure 5.

Dans cet exemple, une première commande C1 arrive à t1 : elle comprend un premier article A et un deuxième article B. Le premier article A est ainsi attribué à la première station d'entrée E1 et le deuxième article B est attribué à la deuxième station d'entrée E2. Les plages gris clair correspondent au temps nécessaire pour sortir l'article considéré du magasin et le présenter au niveau de la station d'entrée en vue de son prélèvement par une navette.

L'article A étant le plus rapide à sortir du magasin, une première navette N1 se présente à la première station d'entrée E1 dès t2, prélève l'article A puis attend que le deuxième article B soit prêt : ce temps d'attente, réalisé dans une zone d'attente, est représenté par une plage hachurée verticalement. Afin de simplifier l'exposé, on considère ici que le temps de déplacement des navettes 42 est négligeable par rapport au temps de traitement des stations d'entrée et de sortie.

A t3, le deuxième article B est disponible au niveau de la deuxième station d'entrée E2 : une deuxième navette N2 se présente alors à la deuxième station d'entrée E2 et prélève l'article B. La commande étant désormais complète, une station de sortie S1 est attribuée et les deux navettes N1, N2 se dirigent vers cette dernière pour décharger leurs articles A et B. Les plages gris foncé correspondent au temps de traitement par la station de sortie : durant cette période la station de sortie considérée est indisponible ; les navettes sont en revanche libérées et peuvent donc réutilisées.

A t4, une deuxième commande C2 arrive : cette dernière comprend un article B, deux articles C et un article D. Ces quatre articles sont alors répartis entre les trois stations d'entrée E1, E2 et E3.

A t5, le premier article B est disponible à la première station d'entrée E1. Comme les navettes N1 et N2 sont à nouveau disponibles, leur déchargement étant terminé, la première navette N1 peut se rendre à la première station d'entrée E1 pour récupérer le premier article B ; elle attend ensuite. De même, à t6, la deuxième navette N2 se rend à la station d'entrée E2 pour récupérer le deuxième article C puis attend ; à t7, une troisième navette N3 se rend à la station d'entrée E3 pour récupérer le troisième article D puis attend.

A t8, une quatrième navette N4 se rend à la station d'entrée E3 pour récupérer le quatrième article C, le prélèvement de l'article précédent sur cette même station d'entrée E3 étant terminé. La période d'indisponibilité de la première station de sortie S1 étant terminée à t8, cette deuxième commande C2, désormais complète, peut être attribuée à cette même station de sortie S1 : les quatre navettes N1, N2, N3 et N4 se dirigent alors vers cette station de sortie S1 pour décharger leurs articles B, C, D et C.

A t9, une troisième commande C3 arrive : cette dernière comprend un unique article A. Cet unique article est alors assigné à la station d'entrée E1.

A t10, l'unique article A est sorti du magasin et se trouve disponible à la première station d'entrée E1. A nouveau, à ce moment t10, toutes les navettes ont terminé leurs déchargements et sont donc disponibles. En conséquence, la première navette N1 est envoyée à la première station d'entrée E1 pour prélever l'article A. Puisque cette commande C3 est une commande mono-article, une station de sortie peut être immédiatement attribuée et la navette N1 se dirige alors immédiatement vers cette dernière. La période d'indisponibilité de la première station de sortie S1 étant terminée à t10, cette troisième commande C3 peut être attribuée à cette même station de sortie S1.

A t11, une quatrième commande C4 arrive : cette dernière comprend un article B, un article E et un article F. Ces trois articles sont alors répartis entre les trois stations d'entrée E1, E2 et E3.

A t12, le premier article à sortir du magasin est l'article B disponible à la première station d'entrée E1. A nouveau, à ce moment t12, toutes les navettes ont terminé leurs déchargements et sont donc disponibles. En conséquence, la première navette N1 est envoyée à la première station d'entrée E1 pour prélever l'article B ; elle attend ensuite. A t13, la deuxième navette N2 se rend à la deuxième station d'entrée E2 pour prélever le deuxième article E puis attend.

A t14, une cinquième commande C5 arrive alors que la quatrième commande C4 n'est pas terminée. Cette cinquième commande C5 comprend un article E, un article F et un article G. Ces trois articles sont alors répartis entre les trois stations d'entrée E1, E2 et E3.

A t15, le premier article B de la cinquième commande C5 est disponible à la première station d'entrée E1. Toutefois, à ce moment t15, les navettes N1 et N2 sont immobilisées puisqu'elles portent déjà des articles de la quatrième commande C4. En conséquence, c'est la troisième navette N3 qui est envoyée à la première station d'entrée E1 pour prélever l'article E ; elle attend ensuite.

A t16, le dernier article F de la quatrième commande C4 est disponible à la troisième station d'entrée E3. Les navettes N1, N2 et N3 étant déjà utilisées, c'est la quatrième navette N4 qui est envoyée à la troisième station d'entrée E3 pour prélever cet article F. La période d'indisponibilité de la première station de sortie S1 étant terminée à t16, cette quatrième commande C4, désormais complète, peut être attribuée à cette même station de sortie S1 : les trois navettes N1, N2 et N4 se dirigent alors vers cette station de sortie S1 pour décharger leurs articles B, E et F.

A t17, le deuxième article F de la cinquième commande est disponible à la deuxième station d'entrée E2. Les navettes N1, N2 et N4 étant à nouveau disponibles, c'est la première navette N1 qui est envoyée à la deuxième station d'entrée E2 pour prélever cet article F.

A t18, la deuxième navette N2 se rend à la station d'entrée E3 pour récupérer le troisième et dernier article G de la cinquième commande C5. Cette fois, la première station de sortie S1 n'a pas encore terminé de traiter la commande précédente. En conséquence, la cinquième commande C5 est attribuée à une deuxième station de sortie S2. Les trois navettes N3, N1 et N2 se dirigent alors vers cette deuxième station de sortie S2 pour décharger leurs articles E, F et G.

La consolidation de ces cinq commandes C1, C2, C3, C4 et C5 est ainsi terminée.

Jusqu'à présent, le procédé de consolidation de commande a été décrit dans une situation simplifiée ne mettant en œuvre qu'un seul type de station d'entrée, les stations d'injection 10, et un seul type de station de sortie, les stations de conditionnement 20. Toutefois, ce procédé de consolidation de commande peut être utilisé avec des types supplémentaires de stations d'entrée et/ou de sortie.

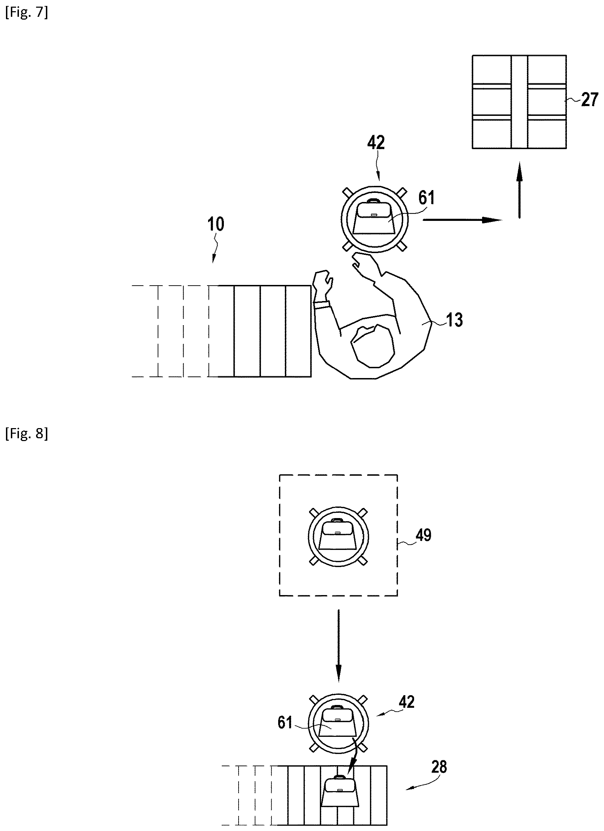

Par exemple, outre des stations de conditionnement 20, certaines stations de sortie de la première flotte de navettes 40a peuvent être des stations de gros 27, destinées au commerce B2B ou au réapprovisionnement de magasins par exemple. Cette situation est représentée sur la figure 7. Ces stations de gros 27 sont adaptées pour des commandes de volume important, mono-article ou multi-articles : elles comprennent ainsi un ou plusieurs conteneurs de grande taille capables de recevoir des articles 61 en vrac. Pour de telles commandes, il est préférable que chaque article 61 de la commande soit déchargé dans la station de gros 27 directement après son prélèvement, sans que les navettes 42 impliquées dans cette commande ne s'attendent les unes les autres.

Ce procédé permet également de gérer les retours d'articles vers le magasin 11. En effet, l'installation 1 peut comprendre une ou plusieurs stations de réintégration 28, connectées au magasin 11, au niveau desquels des articles 61 peuvent être déchargés en vue de leur réintégration dans le magasin 11, de manière symétrique aux stations d'injection 10. D'ailleurs, ces stations de réintégration 28 peuvent être formées par des stations d'injections 10 que l'unité de contrôle 50 désigne temporairement comme station de réintégration 28.

Ainsi, en cas d'erreur, plutôt que de décharger les articles 61 des commandes en erreur dans une station d'erreur 26, il est possible de réintégrer directement ces articles 61 dans le magasin 11 grâce à une telle station de réintégration 28.

L'installation 1 peut également comprendre une ou plusieurs stations de retour, formant un type de station d'entrée pour la première flotte de navettes 40a, au niveau desquelles des articles retournés par des clients peuvent être injectés dans le système. Des navettes 42 sont alors chargées de prélever ces articles 61 et de les décharger au niveau d'une ou plusieurs stations de réintégration 28 en vue de les réintégrer dans le magasin 11.

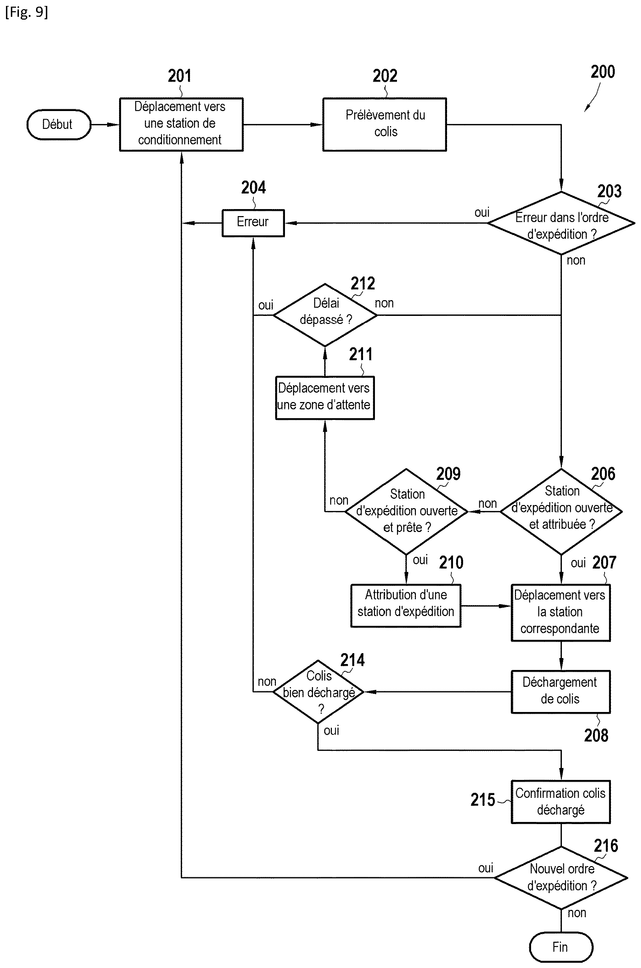

La deuxième phase de répartition des expéditions va maintenant être expliquée en référence à la figure 9. Cette dernière met en œuvre la deuxième flotte de navette 40b. Le fonctionnement de cette dernière est tout à fait analogue à celui de la première flotte de navettes 40a si ce n'est que ces navettes 42 transportent des colis 70, en lieu et place des articles 61-63, et circulent entre les stations de conditionnement 20 et les stations d'expédition 30.

La figure 9 détaille ainsi une routine 200 de contrôle de navette mise en œuvre par l'unité de contrôle 50 pour cette seconde flotte 40b. Comme il pourra être observé, cette routine est tout à fait analogue à la routine 100 de la figure 4.

Cette routine 200 débute alors qu'un ordre d'expédition a été reçu et qu'un colis 70 est disponible à une station de conditionnement 20. Une navette 42 se déplace alors jusqu'à cette station de conditionnement 20 (étape 201). Le colis présenté par cette station de conditionnement 20 est alors transféré sur la navette 42 (étape 202). Ce transfert peut être opéré manuellement ou automatiquement.

L'unité de contrôle 50 vérifie ensuite s'il existe une erreur dans l'ordre d'expédition (étape 203) : si c'est le cas, la navette 42 passe en mode erreur, décharge le colis 70 qu'elle porte et se retrouve prête pour traiter un nouvel ordre d'expédition (étape 204).

En l'absence d'erreur, l'unité de contrôle 50 vérifie s'il existe déjà une station d'expédition 30 ouverte et attribuée pour cet ordre d'expédition (étape 206) : si c'est le cas, la navette 42 se déplace alors jusqu'à cette station d'expédition 30 (étape 207). Le colis 70 est alors déchargé et pris en charge par la station d'expédition 30 (étape 208).

Si aucune station d'expédition 30 n'est déjà attribuée pour cet ordre d'expédition, l'unité de contrôle 50 vérifie s'il existe une station d'expédition 30 ouverte et prête à être attribuée au sein du groupe de stations de sortie adapté à la commande en cours (étape 209). S'il existe bien une telle station 30, l'unité de contrôle 50 sélectionne une telle station 30 et lui attribue l'ordre d'expédition en cours (étape 210) : la navette 42 se déplace alors vers cette station 30 (étape 207). A défaut, la navette 42 se déplace vers une zone d'attente 49 (étape 211) pour attendre qu'une station d'expédition 30 adaptée soit rendue disponible (ouverte et prête). Lors de cette attente, si un délai prédéterminé est dépassé (étape 212), la navette 42 passe en mode erreur (étape 204).

En tout état de cause, après l'étape 208 de déchargement, l'unité de contrôle 50 vérifie, à l'aide de capteurs présents sur la navette 42 et/ou sur la station d'expédition 30, si le colis 70 a bien été déchargé (étape 214). Si cela n'est pas le cas, la navette 42 passe en mode erreur (étape 204). Au contraire, si la vérification est positive, l'unité de contrôle 50 confirme que le colis 70 est bien déchargé (étape 215). La navette 42 est alors libérée et peut aller chercher un nouveau colis 70 si un nouvel ordre d'expédition est reçu (étape 216).

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Installation de préparation de commandes, comprenant
une pluralité de stations d'entrée (10),
une pluralité de stations de sortie (20),
une première flotte de navettes mobiles (40a) configurée pour assurer une première phase de consolidation de commande, chaque navette (42) comportant un dispositif de locomotion (43), permettant à la navette (42) de se déplacer entre les stations d'entrée (10) et les stations de sortie (20), et un réceptacle (44) prévu pour recevoir un article (61), et
une unité de contrôle (50),
dans laquelle, en vue de préparer une commande incluant au moins deux articles (61, 62), l'unité de contrôle (50) est configurée pour
attribuer un premier article (61) de la commande à une première station d'entrée (10) et diriger une première navette (42) vers ladite première station d'entrée (10) pour prélever ledit premier article (61),
attribuer un deuxième article (62) de la commande à une deuxième station d'entrée (10) et diriger une deuxième navette (42) vers ladite deuxième station d'entrée (10) pour prélever ledit deuxième article (62), et
diriger les première et deuxième navettes (42) vers une station de sortie (20) donnée pour décharger les premier et deuxième articles (61, 62) à ladite station de sortie (20), **caractérisée en ce qu'**elle comprend:
une deuxième flotte de navettes (40b) configurée pour assurer une deuxième phase de répartition des expéditions des articles (61, 62).

2. Installation selon la revendication 1, dans laquelle l'unité de contrôle (50) est configurée pour mobiliser, pour une commande donnée, autant de navettes (42) que d'articles (61-63) dans ladite commande donnée.

3. Installation selon la revendication 1 ou 2, dans laquelle, pour une commande donnée, l'unité de contrôle (50) est configurée pour ordonner le déchargement des articles (61-63) à la station de sortie (20) uniquement lorsque tous les articles (61-63) de ladite commande donnée ont été prélevés par des navettes (42).

4. Installation selon l'une quelconque des revendications 1 à 3, comprenant une zone d'attente (49), l'unité de contrôle (50) étant configurée pour diriger au moins une navette (42) vers la zone d'attente (49) si au moins un autre article (63) de ladite commande donnée n'est pas encore arrivé à une station d'entrée (20) ou si aucune station de sortie (20) n'est disponible pour recevoir les articles (61-63) de ladite commande donnée.

5. Installation selon l'une quelconque des revendications 1 à 4, dans laquelle l'unité de contrôle (50) est configurée pour ordonner le déchargement des articles (61-63) d'une commande donnée dans un ordre prédéterminé.

6. Installation selon l'une quelconque des revendications 1 à 5, dans laquelle au moins une station d'entrée est une station d'injection (10) connectée à un magasin (11).

7. Installation selon l'une quelconque des revendications 1 à 6, dans laquelle au moins une station de sortie est une station de conditionnement (20) configurée pour conditionner ensemble les différents articles (61-63) d'une commande donnée.

8. Installation selon l'une quelconque des revendications 1 à 7, dans laquelle au moins une station de sortie est une station de gros (27) configurée pour stocker un nombre important d'articles (61).

9. Installation selon l'une quelconque des revendications 1 à 8, dans laquelle au moins une station de sortie est une station de réintégration (28), connectée au magasin (11).

10. Installation selon l'une quelconque des revendications 1 à 9, dans laquelle les navettes (42) se déplacent le long d'une surface de circulation (41a).

11. Installation selon l'une quelconque des revendications 1 à 10, dans laquelle au moins une station d'entrée est une station de conditionnement (20) et au moins une station de sortie est une station d'expédition (30).

12. Procédé de préparation de commandes mettant en œuvre
une pluralité de stations d'entrée (10),
une pluralité de stations de sortie (20),
une première flotte de navettes mobiles (40a) configurée pour assurer une première phase de consolidation de commande, chaque navette (42) comportant un dispositif de locomotion (43), permettant à la navette (42) de se déplacer entre les stations d'entrée (10) et les stations de sortie (20), et un réceptacle (44) prévu pour recevoir un article (61), et
une unité de contrôle (50),
dans lequel, en vue de préparer une commande incluant au moins deux articles (61, 62),
un premier article (61) de la commande est attribué à une première station d'entrée (10) et une première navette (42) est dirigée vers ladite première station d'entrée (10) pour prélever ledit premier article (61),
un deuxième article (62) de la commande est attribué à une deuxième station d'entrée (20) et une deuxième navette (42) est dirigée vers ladite deuxième station d'entrée (10) pour prélever ledit deuxième article (62), et
les première et deuxième navettes (42) sont dirigées vers une station de sortie (20) donnée pour décharger les premier et deuxième articles (61, 62) à ladite station de sortie (20), **caractérisé en ce qu'**il comprend:
une deuxième phase de répartition des expéditions des articles (61, 62) assurée par une deuxième flotte de navettes (40b).

## Patentansprüche

1. Anlage zur Vorbereitung von Bestellungen, umfassend:
eine Vielzahl von Eingangsstationen (10),
eine Vielzahl von Ausgangsstationen (20),
eine erste Flotte von mobilen Shuttles (40a), die konfiguriert ist, um eine erste Phase zur Bestellungszusammenführung sicherzustellen, wobei jedes Shuttle (42) eine Fortbewegungsvorrichtung (43) umfasst, die es dem Shuttle (42) ermöglicht, sich zwischen den Eingangsstationen (10) und den Ausgangsstationen (20) zu bewegen, und eine Aufnahmevorrichtung (44), die vorgesehen ist, um einen Artikel (61) aufzunehmen, und
eine Steuereinheit (50),
bei der, um eine Bestellung vorzubereiten, der mindestens zwei Artikel (61, 62) beinhaltet, die Steuereinheit (50) konfiguriert ist, um
einen ersten Artikel (61) der Bestellung einer ersten Eingangsstation (10) zuzuweisen und das erste Shuttle (42) hin zur ersten Eingangsstation (10) zu lenken, um den ersten Artikel (61) aufzunehmen,
einen zweiten Artikel (62) der Bestellung einer zweiten Eingangsstation (10) zuzuweisen und ein zweites Shuttle (42) hin zur zweiten Eingangsstation (10) zu lenken, um den zweiten Artikel (62) aufzunehmen, und
das erste und das zweite Shuttle (42) hin zu einer Ausgangsstation (20) zu lenken, um den ersten und den zweiten Artikel (61, 62) an der Ausgangsstation (20) zu entladen, **dadurch gekennzeichnet, dass** sie Folgendes umfasst:
eine zweite Flotte von Shuttles (40b), die konfiguriert ist, um eine zweite Phase der Verteilung des Versands der Artikel (61, 62) sicherzustellen.

2. Anlage nach Anspruch 1, wobei die Steuereinheit (50) konfiguriert ist, um für eine gegebene Bestellung so viele Shuttles (42) zu mobilisieren, wie Artikel (61 - 63) in der gegebenen Bestellung vorhanden sind.

3. Anlage nach Anspruch 1 oder 2, wobei für eine gegebene Bestellung die Steuereinheit (50) konfiguriert ist, um die Entladung der Artikel (61 - 63) an der Ausgabestation (20) nur dann anzuordnen, wenn alle Artikel (61 - 63) der gegebenen Bestellung von Shuttles (42) aufgenommen wurden.

4. Anlage nach einem der Ansprüche 1 bis 3, umfassend einen Wartebereich (49), wobei die Steuereinheit (50) konfiguriert ist, um mindestens ein Shuttle (42) hin zum Wartebereich (49) zu lenken, wenn mindestens ein anderer Artikel (63) der gegebenen Bestellung noch nicht an einer Eingangsstation (20) angekommen ist, oder wenn eine Ausgangsstation (20) nicht zur Verfügung steht, um die Artikel (61 - 63) der gegebenen Bestellung aufzunehmen.

5. Anlage nach einem der Ansprüche 1 bis 4, wobei die Steuereinheit (50) konfiguriert ist, um das Entladen der Artikel (61 - 63) einer gegebenen Bestellung in einer vorgegebenen Reihenfolge durchzuführen.

6. Anlage nach einem der Ansprüche 1 bis 5, wobei mindestens eine Eingangsstation eine Einspeisestation (10) ist, die mit einem Lager (11) verbunden ist.

7. Anlage nach einem der Ansprüche 1 bis 6, wobei mindestens eine Ausgangsstation eine Verpackungsstation (20) ist, die konfiguriert ist, um die Gesamtheit der verschiedenen Artikel (61 - 63) einer gegebenen Bestellung zu verpacken.

8. Anlage nach einem der Ansprüche 1 bis 7, wobei mindestens eine Ausgangsstation eine Massenstation (27) ist, die konfiguriert ist, um eine bedeutende Anzahl von Artikeln (61) zu lagern.

9. Anlage nach einem der Ansprüche 1 bis 8, wobei mindestens eine Ausgangsstation eine Wiedereingliederungsstation (28) ist, die mit dem Lager (11) verbunden ist.

10. Anlage nach einem der Ansprüche 1 bis 9, wobei sich die Shuttles (42) auf einer Fahrbahn (41a) bewegen.

11. Anlage nach einem der Ansprüche 1 bis 10, wobei mindestens eine Eingangsstation eine Verpackungsstation (20) ist und mindestens eine Ausgangsstation eine Versandstation (30) ist.

12. Verfahren zur Vorbereitung von Bestellungen, das Folgendes implementiert:
eine Vielzahl von Eingangsstationen (10),
eine Vielzahl von Ausgangsstationen (20),
eine erste Flotte von mobilen Shuttles (40a), die konfiguriert ist, um eine erste Phase zur Bestellungszusammenführung sicherzustellen, wobei jedes Shuttle (42) eine Fortbewegungsvorrichtung (43) umfasst, die es dem Shuttle (42) ermöglicht, sich zwischen den Eingangsstationen (10) und den Ausgangsstationen (20) zu bewegen, und eine Aufnahmevorrichtung (44), die vorgesehen ist, um einen Artikel (61) aufzunehmen, und
eine Steuereinheit (50),
in der, um eine Bestellung vorzubereiten, die mindestens zwei Artikel (61, 62) beinhaltet,
ein erster Artikel (61) der Bestellung einer ersten Eingangsstation (10) zugewiesen ist, und ein erstes Shuttle (42) hin zur ersten Eingangsstation (10) gelenkt wird, um einen ersten Artikel (61) aufzunehmen, ein zweiter Artikel (62) der Bestellung einer zweiten Eingangsstation (20) zugewiesen ist, und ein zweites Shuttle (42) hin zur zweiten Eingangsstation (10) gelenkt wird, um den zweiten Artikel (62) aufzunehmen, und das erste und zweite Shuttle (42) hin zu einer gegebenen Ausgangsstation (20) gelenkt werden, um den ersten und zweiten Artikel (61, 62) an der Ausgangsstation (20) zu entladen, **dadurch gekennzeichnet, dass** sie Folgendes umfasst:
eine zweite Phase der Verteilung des Versands der Artikel (61, 61), die durch eine zweite Flotte von Shuttles (40b) sichergestellt ist.

## Claims

1. An order preparation installation, comprising
a plurality of input stations (10),
a plurality of output stations (20),
a first fleet of mobile shuttles (40a) configured to provide a first order consolidation phase, each shuttle (42) including a locomotion device (43), allowing the shuttle (42) to move between the input stations (10) and the output stations (20), and a receptacle (44) intended to receive an article (61), and
a control unit (50),
wherein, in order to prepare an order including at least two articles (61, 62), the control unit (50) is configured to assign a first article (61) of the order to a first input station (10) and direct a first shuttle (42) toward said first input station (10) to pick up said first article (61), assign a second article (62) of the order to a second input station (10) and direct a second shuttle (42) toward said second input station (10) to pick up said second article (62), and direct the first and second shuttles (42) toward a given output station (20) to unload the first and second articles (61, 62) at said output station (20), **characterized in that** it comprises:
a second fleet of shuttles (40b) configured to ensure a second distribution phase of the shipments of the articles (61, 62).

2. The installation according to claim 1, wherein the control unit (50) is configured to mobilize, for a given order, as many shuttles (42) as there are articles (61-63) in said given order.

3. The installation according to claim 1 or 2, wherein, for a given order, the control unit (50) is configured to order the unloading of the articles (61-63) at the output station (20) only when all the articles (61-63) of said given order have been picked up by the shuttles (42).

4. The installation according to any one of claims 1 to 3, comprising a waiting area (49), the control unit (50) being configured to direct at least one shuttle (42) toward the waiting area (49) if at least one other article (63) of said given order has not yet arrived at an input station (20) or if no output station (20) is available to receive the articles (61-63) of said given order.

5. The installation according to any one of claims 1 to 4, wherein the control unit (50) is configured to order the unloading of the articles (61-63) of a given order in a predetermined order.

6. The installation according to any one of claims 1 to 5, wherein at least one input station is an injection station (10) connected to a warehouse (11).

7. The installation according to any one of claims 1 to 6, wherein at least one output station is a packaging station (20) configured to package together the different articles (61-63) of a given order.

8. The installation according to any one of claims 1 to 7, wherein at least one output station is a bulk station (27) configured to store a large number of articles (61).

9. The installation according to any one of claims 1 to 8, wherein at least one output station is a reintegration station (28), connected to the warehouse (11).

10. The installation according to any one of claims 1 to 9, wherein the shuttles (42) move along a travel surface (41a).

11. The installation according to any one of claims 1 to 10, wherein at least one input station is a packaging station (20) and at least one output station is a dispatch station (30).

12. An order preparation method implementing
a plurality of input stations (10),
a plurality of output stations (20),
a first fleet of mobile shuttles (40a) configured to ensure a first order consolidation phase, each shuttle (42) including a locomotion device (43), allowing the shuttle (42) to move between the input stations (10) and the output stations (20), and a receptacle (44) provided to receive an article (61), and
a control unit (50),
wherein, in order to prepare an order including at least two articles (61, 62), a first article (61) of the order is assigned to a first input station (10) and a first shuttle (42) is directed toward said first input station (10) to pick up said first article (61),
a second article (62) of the order is assigned to a second input station (20) and a second shuttle (42) is directed toward said second input station (10) to pick up said second article (62), and
the first and second shuttles (42) are directed toward a given output station (20) to unload the first and second articles (61, 62) at said output station (20), **characterized in that** it comprises:
a second distribution phase of the shipments of the articles (61, 62) ensured by a second fleet of shuttles (40b).
